# EUROPÄISCHE PATENTSCHRIFT

(11) **EP 0 421 927 B1**
(45) Veröffentlichungstag und Bekanntmachung des Hinweises auf die Patenterteilung: **31.05.1995**
(21) Anmeldenummer: 90810730.3
(22) Anmeldetag: 21.09.1990
(51) Int. Cl.: C09B 41/00, D06P 1/04, D06P 3/32, C09B 29/12, C09B 67/22, C09B 33/04, C09B 33/18

(54) **Verfahren zur Herstellung von Mono- und Polyazofarbstoffen**
Preparation process of mono- and polyazo-dyes
Procédé de préparation de colorants mono- et polyazoiques

(30) Priorität: 30.09.1989 DE 3932829
(43) Veröffentlichungstag der Anmeldung: 10.04.1991
(73) Patentinhaber: CIBA-GEIGY AG, 4002 Basel (CH)
(72) Erfinder: Langfeld, Horst, Dr., W-7889 Grenzach-Wyhlen 1 (DE); Minges, Roland, Dr., W-7889 Grenzach-Wyhlen 2 (DE)

(56) Entgegenhaltungen:
- EP-A- 0 244 687
- EP-B- 107 765
- DE-B- 1 544 376
- US-A- 2 049 286
- US-A- 2 653 150
- J.Hengstenberg, B. Sturm, O.Winkler "Messen, Steuern und Regeln in der Chemischen Technik"; Band II, Seite 348(1980)

## Beschreibung

Die Erfindung betrifft ein Verfahren zum Kuppeln von einer oder mehreren verschiedenen Diazokomponenten mit Resorcin, wonach insbesondere Polyazofarbstoffe im technischen Massstab mit überaus hoher Qualitätskonstanz hergestellt werden können.

Das Kuppeln von Diazokomponenten mit Resorcin, eine infolge der ausserordentlichen Kupplungsfähigkeit des Resorcins äusserst schnell ablaufende Reaktion, ist an sich bekannt, z.B. aus der US-A-2,049,286, die jedoch nicht lehrt, den pH-Wert konstant zu halten.

Resorcin weist mehrere Kupplungspositionen auf und kann dementsprechend mit mehreren, im Maximum drei, gleichen oder verschiedenen Diazokomponenten gekuppelt werden. Die Kupplungspositionen sowie die Reaktivität der einzelnen kupplungsfähigen Spezies sind in allererster Linie vom Kupplungs-pH-Wert abhängig. Insbesondere wenn nacheinander verschiedene Diazokomponenten mit Resorcin gekuppelt werden, die gegebenenfalls zum Teil auch noch selbst kupplungsfähig sind, so können je nach verwendetem pH-Wert sehr verschiedene Produkte bzw. Produktgemische erhalten werden. Daraus ergibt sich im Hinblick auf die typkonstante Herstellung solcher Polyazofarbstoffe das Erfordernis, dass der pH-Wert während der Kupplungsreaktionen sehr genau und mit geringer Bandbreite gesteuert werden muss, da sonst das erhaltene Produkt in bezug auf Zusammensetzung, Nuance und physikalisch-chemische Eigenschaften, z.B. Löslichkeit, von Ansatz zu Ansatz variiert, d.h. eine Typ-Konformität nicht gegeben ist oder zumindest Probleme aufwirft.

Bekannte technische Resorcin-Kupplungsverfahren tragen diesem Umstand oft nicht genügend Rechnung; zwar ist man bemüht, den eingestellten Kupplungs-pH-Wert durch Neutralisierung der im Zulauf der diazotierten Diazoverbindung vorhandenen und während der Kupplung entstehenden Säure mittels eines separaten Basenzulaufs konstant zu halten, doch reichen die getroffenen Massnahmen oftmals nicht aus, um den Kupplungs-pH-Wert wirkungsvoll steuern und/oder stabilisieren zu können. Insbesondere Störungen in einem der Zuläufe, etwa infolge Verstopfung, Druckabfalls, Abweichung von der vorgeschriebenen Konzentration usw., können leicht zu Abweichungen des Reaktions-pH-Wertes vom Soll-Wert führen. Weitere Abweichungen vom Soll-Wert können bei adiabatischer Arbeitsweise dadurch entstehen, dass der pH-Wert temperaturabhängig ist und mit steigender Temperatur abnimmt. Schliesslich ist auch der pH-Wert innerhalb des Reaktionsgefässes trotz Rührens nicht homogen, sondern z.B. im Bereich des Diazo-Zulaufs saurer und im Bereich des Basenzulaufs alkalischer.

Jegliche auch nur kurzfristige pH-Schwankungen bei den vorbekannten Verfahren können jedoch, wie oben geschildert, Produkte mit stark vom Typ abweichender Qualität zur Folge haben. Solche Abweichungen wurden bisher im allgemeinen in Kauf genommen und versucht, sie durch langwieriges Nuancieren zu beheben beziehungsweise abzumildern. Moderne Betriebe mit genormten Produktionsstrassen lassen jedoch ein solches Vorgehen nicht mehr zu; hier kommt es vielmehr darauf an, die Herstellung der Farbstoffe so reproduzierbar zu gestalten, dass die Produkte ohne aufwendige Nachbehandlungen zum fertigen Farbstoff weiterverarbeitet werden können. Es besteht daher das Bedürfnis nach einem verbesserten Verfahren für die reproduzierbare Herstellung von Polyazofarbstoffen auf der Basis von Resorcin im technischen Massstab, welches mit der vorliegenden Erfindung zur Verfügung gestellt wird.

Gegenstand der Erfindung ist daher ein Verfahren zum Kuppeln von einer oder mehreren verschiedenen Diazokomponenten mit Resorcin, worin man eine wässrige Resorcinlösung im Reaktionsgefäss vorlegt, den gewünschten Kupplungs-pH-Wert einstellt und getrennt voneinander a) die mineralsaure Lösung der diazotierten Diazokomponente bzw. aufeinanderfolgend die mineralsauren Lösungen der verschiedenen diazotierten Diazokomponenten und b) die Lösung einer Base zulaufen lässt, welches dadurch gekennzeichnet ist, dass man die Kupplungsreaktionen adiabatisch durchführt und den Kupplungs-pH-Wert der Resorcin-Vorlage vor der Umsetzung mit Hilfe eines Puffersystems einstellt und stabilisiert und während der Kupplungsreaktion(en) mittels einer Durchflussverhältnis-Regelung der Zuläufe a) und b) konstant hält.

Geeignete Diazokomponenten für das erfindungsgemässe Verfahren sind z.B. 1- oder 2-Naphthylamine oder Aminobenzole, wobei diese Diazokomponenten gegebenenfalls einen oder mehrere gleiche oder verschiedene Substituenten tragen können. Beispiele für Substituenten am 1- oder 2-Naphthylamin oder Aminobenzol sind: C₁-C₄-Alkyl, womit generell Methyl, Ethyl, n- oder iso-Propyl oder n-, iso-, sec.- oder tert.-Butyl umfasst ist; C₁-C₄-Alkoxy, worunter generell Methoxy, Ethoxy, n- oder iso-Propoxy oder n-, iso-, sec.- oder tert.-Butoxy zu verstehen ist; Amino, N-Mono- oder N,N-Di-C₁-C₄-Alkylamino; Phenylamino, worin das Phenyl gegebenenfalls z.B. durch Sulfo, Nitro, C₁-C₄-Alkyl, C₁-C₄-Alkoxy oder Halogen substituiert ist; Halogen, z.B. Fluor, Brom und insbesondere Chlor; Trifluormethyl; Hydroxy; Sulfo; Nitro; Cyano; Carboxy; Phenoxy; C₁-C₄-Alkylsulfonyl, z.B. Methyl- oder Ethylsulfonyl; Sulfamoyl; N-Mono- oder N,N-Di-C₁-C₄-Alkylsulfamoyl; Carbamoyl, N-Mono- oder N,N-Di-C₁-C₄-Alkylcarbamoyl; C₁-C₄-Alkanoylamino, z.B. Acetylamino, Propionylamino; C₁-C₄-Alkoxycarbonyl, z.B. Methoxy- oder Ethoxycarbonyl.

Vorzugsweise kommen für das erfindungsgemässe Verfahren als Diazokomponenten 1- oder 2-Naphthylamine und/oder Aminobenzole in Betracht, welche jeweils unsubstituiert oder z.B. durch Sulfo, Nitro, C₁-C₄-Alkyl, C₁-C₄-Alkoxy, Carboxy, Hydroxy, Halogen oder gegebenenfalls im Phenylteil durch Nitro, Sulfo, C₁-C₄-Alkyl, C₁-C₄-Alkoxy oder Halogen substituiertes Phenylamino weitersubstituiert sind.

Besonders bevorzugte Diazokomponenten für das erfindungsgemässe Verfahren sind:

### a) Verbindungen der Formel

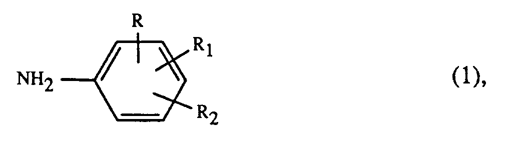

worin R, R₁ und R₂ unabhängig voneinander Wasserstoff, Chlor, Nitro, Methyl, Methoxy, Sulfo, Hydroxy oder Carboxy bedeuten;

### b) Verbindungen der Formel

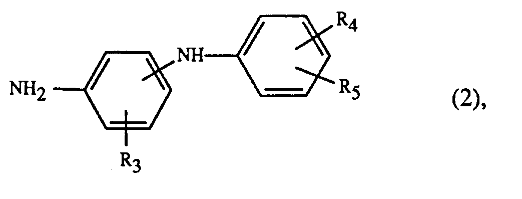

worin R₃ Wasserstoff oder Sulfo bedeutet und R₄ und R₅ unabhängig voneinander für Wasserstoff, Sulfo, Nitro, Methyl, Methoxy oder Chlor stehen;

### c) Verbindungen der Formel

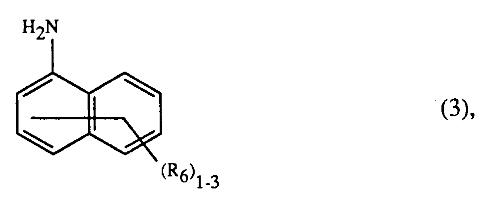

worin R₆ für 1 bis 3 gleiche oder verschiedene Substituenten ausgewählt aus der Gruppe Hydroxy, Sulfo, Chlor und Nitro steht; und

### d) Verbindungen der Formel

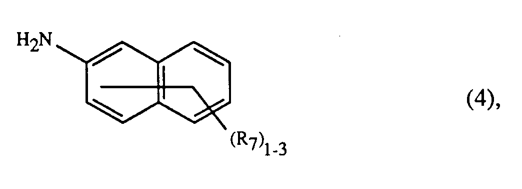

worin R₇ für 1 bis 3 gleiche oder verschiedene Substituenten ausgewählt aus der Gruppe Sulfo und Hydroxy steht.

Beispiele für insbesondere bevorzugte Diazokomponenten sind: 1-Amino-8-hydroxynaphthalin-3,6- oder -4,6-disulfonsäure, 1-Amino-2-hydroxynaphthalin-4-sulfonsäure, 1-Amino-2-hydroxy-6-nitronaphthalin-4-sulfonsäure, o-, m- oder p-Nitroanilin, 4'-Amino-4-nitrodiphenylamin-2-sulfonsäure, 4'-Amino-2-sulfodiphenylamin, 6-Nitro-4-sulfo-2-aminophenol, 4-Nitro-6-sulfo-2-aminophenol, 4,6-Dinitro-2-aminophenol, 4- oder 5-Nitro-2-aminophenol, 4-Chlor-6-nitro-1-aminophenol, 6-Chlor-4-nitro-2-aminophenol und Sulfanilsäure.

Das erfindungsgemässe Verfahren ist insbesondere geeignet für die Herstellung von Polyazofarbstoffen, d.h. für die Kupplung von Resorcin mit aufeinanderfolgend 2 oder mehr als 2, vorzugsweise 2, 3 oder 4 und besonders bevorzugt 3, verschiedenen Diazokomponenten.

Eine bevorzugte Ausführungsform des erfindungsgemässen Verfahrens ist dadurch gekennzeichnet, dass man 2, 4 oder insbesondere 3 verschiedene Diazokomponenten, ausgewählt aus der Gruppe 1-Amino-8-hydroxynaphthalin-3,6-disulfonsäure, o-, m- oder p-Nitroanilin, 4'-Amino-4-nitrodiphenylamin-2-sulfönsäure, 6-Nitro-4-sulfo-2-aminophenol, 4-Nitro-6-sulfo-2-aminophenol und 4- oder 5-Nitro-2-aminophenol, nacheinander mit Resorcin kuppelt.

Man arbeitet zweckmässig bei einem leicht sauren, neutralen oder alkalischen Kupplungs-pH-Wert, d.h. bei einem pH-Wert von z.B. 3 bis 12, wobei für die Kupplungsreaktion ein neutrales oder alkalisches Medium und insbesondere ein leicht alkalisches Medium, d.h. ein Medium, welches einen pH-Wert von 7,5 bis 12, vorzugsweise 8,0 bis 9,0 und besonders bevorzugt 8,2 bis 8,8 aufweist, bevorzugt ist. Der Kupplungs-pH-Wert in der Resorcin-Vorlage wird mittels eines geeigneten Puffer-Systems eingestellt und stabilisiert. Geeignete Puffersysteme sind insbesondere die an sich bekannten Pufferlösungen bestehend aus einer schwachen Säure und ihren Salzen, wobei grundsätzlich alle Puffersysteme innerhalb eines gewünschten pH-Bereiches in Frage kommen. Beispiele sind Essigsäure/Acetat, Phthalat/Hydrogenphthalat, Citronensäure/Citrat, Diethylbarbitursäure/Diethylbarbiturat, Hydrogenphosphat/Dihydrogenphosphat, Carbonat/Hydrogencarbonat, Borsäure/Borat und Phosphat/Hydrogenphosphat.

Die Herstellung der genannten sowie weiterer Puffersysteme ist z.B. aus dem Chemiker-Kalender, C. Synowietz und K. Schäfer, Springer Verlag (1984), S. 534-538, bekannt.

Bevorzugt verwendet man ein Hydrogenphosphat/Dihydrogenphosphat-, Diethylbarbitursäure/Diethylbarbiturat-, Borsäure/borat- und besonders bevorzugt ein Carbonat/Hydrogencarbonat-Puffersystem.

Vorteilhaft geht man bei dem erfindungsgemässen Verfahren so vor sich, dass man entweder die schwache Säure zur wässrigen Resorcinlösung zusetzt und den gewünschten pH-Wert durch Zugabe einer starken Base, z.B. Natriumhydroxidlösung einstellt oder, vorzugsweise, dass man zunächst das Salz einer schwachen Säure, z.B. Natriumcarbonat zugibt und dann mit einer starken Säure, z.B. Salzsäure, den gewünschten pH-Wert einstellt.

Die gepufferte Lösung der Kupplungskomponente weist vor der Zugabe von Diazoverbindung und Base eine Temperatur von z.B. -5 bis 30°C und vorzugsweise 0 bis 15°C auf.

Die Diazotierung der Diazokomponenten erfolgt jeweils in an sich bekannter Weise z.B. in einem mineralsauren Medium und vorzugsweise in salzsaurer Lösung unter Verwendung eines Nitrits, z.B. eines Alkalimetallnitrits wie Natriumnitrit, bei Temperaturen von z.B. -5 bis 30°C und vorzugsweise 0 bis 20°C. Ein gegebenenfalls vorhandener Nitritüberschuss wird vorteilhaft vor der Weiterreaktion in üblicher Weise, z.B. mit Sulfaminsäure, zerstört.

Der Zulauf a) enthält z.B. 0,5 bis 3,0 Mol, vorzugsweise 0,5 bis 2,0 Mol und besonders bevorzugt 0,6 bis 1,5 Mol Diazokomponente pro Mol Resorcin; werden nacheinander mehrere verschiedene Diazokomponenten mit Resorcin gekuppelt, was bevorzugt ist, so setzt man von jeder einzelnen Diazokomponente z.B. 0,5 bis 2,0 Mol, vorzugsweise 0,6 bis 1,5 Mol und besonders bevorzugt 0,65 bis 1,2 Mol pro Mol Resorcin ein.

Als Basen für den Zulauf b) kommen z.B. Alkalimetallhydroxide wie Kalium- oder Natriumhydroxid, Alkalimetallcarbonate, Ammoniak oder organische Amine in Betracht. Bevorzugt ist die Verwendung von Kaliumhydroxid und insbesondere von Natriumhydroxid, wobei die genannten Hydroxide z.B. in Form einer 10 bis 50 Gew.-%, vorzugsweise 25 bis 40 Gew.-%, enthaltenden wässrigen Lösung eingesetzt werden.

Die Kupplungsreaktionen werden beim erfindungsgemässen Verfahren adiabatisch, d.h. praktisch ohne Wärmeaustausch mit der Umgebung, durchgeführt; dementsprechend steigt die Temperatur im Verlauf der Kupplungsreaktion an und bewegt sich z.B. zwischen -5 und 30°C.

Es hat sich als besonders praktikabel erwiesen, eine Temperatur von 0 bis 5°C als Anfangstemperatur zu verwenden; während der Kupplungsreaktion ergibt sich dann ein Temperaturanstieg auf z.B. 10 bis 20°C.

Die für die erfindungsgemässen Kupplungsreaktionen verwendete Apparatur besteht üblicherweise aus einem oder mehreren Rührkesseln, die mit einer pH-Messeinrichtung, einem Einlass für die Kupplungskomponente und die Pufferlösung sowie zwei getrennten Zulaufvorrichtungen für den Diazozulauf a) einerseits und den Basenzulauf b) andererseits versehen sind. In den Zulaufleitungen der Ströme a) und b) befindet sich jeweils ein Durchflussmesser, mit dessen Hilfe die aktuelle Zulaufmenge gemessen werden kann. Die Steuerung der Zulaufmengen der Ströme a) und b) erfolgt anhand einer Durchflussverhältnis-Regelung z.B. halbautomatisch oder vorzugsweise selbsttätig mittels geeigneter Computer. Durchflussverhältnis-Regelungen sind in der chemischen Verfahrenstechnik an sich bekannt und stellen z.B. ein Mittel zur Einhaltung der Reaktionsstöchiometrie bei chemischen Prozessen dar.

Man geht beim erfindungsgemässen Verfahren z.B. so vor, dass man den Durchfluss in der Zulaufleitung eines der Ströme a) oder b), misst und als Stellgrösse den anderen Zulauf b) oder a) benutzt. Die Synchronisation der Zuläufe a) und b) geschieht mittels eines Verhältnisgebers, der aus dem Ist-Wert des Zulaufs a) bzw. b) und dem vorgegebenen Durchflussverhältnis a)/b) den Soll-Wert für den Zulauf b) bzw. a) bestimmt und an einen Regler übermittelt, der seinerseits den Zulauf b) bzw. a) z.B. über ein geeignetes Ventil steuert. Es ist hierbei bevorzugt, den Durchfluss in der Zulaufleitung des Stroms a) zu messen und anhand seines Ist-Werts jeweils den Soll-Wert für den Zulauf b) zu ermitteln und einzustellen.

Bei der erfindungsgemäss verwendeten Durchflussverhältnis-Regelung handelt es sich demnach um eine Folgeregelung; Aenderungen z.B. im Zulauf a) bewirken eine Aenderung des Soll-Wertes für den Regler des Zulaufs b); der neue Soll-Wert sorgt dafür, dass das entsprechende Regelventil den Zulauf b) in gleicher Weise wie den Zulauf a) ändert, sodass bei richtiger Einstellung des Verhältnisgebers der pH-Wert innerhalb geringer Bandbreiten konstant bleibt.

Die Einstellung des Verhältnisgebers kann z.B. manuell erfolgen; beispielsweise wird der Kupplungs-pH-Wert im Reaktionsgefäss laufend überwacht und Abweichungen vom verfahrenstechnisch vorgeschriebenen pH-Wert durch Aenderung der Einstellung des Verhältnisgebers von Hand korrigiert. Die Steuerung des Verhältnisgebers erfolgt jedoch vorzugsweise selbsttätig; beispielsweise kann der Verhältnisgeber über einen pH-Regler gesteuert werden; dieser ermittelt aus dem aktuellen pH-Wert im Reaktionsgefäss, der mittels der pH-Messstelle im Kessel zugänglich ist, und dem produktspezifischen Soll-pH-Wert den Sollwert für das Zulaufsverhältnis der Ströme a) und b) und bewirkt eine entsprechende Einstellung des Verhältnisgebers. Abweichungen des pH-Werts von seinem spezifischen Sollwert führen somit über die Stellgrösse des pH-Reglers zur Aenderung des Verhältniswerts im Verhältnisgeber und damit zu einer Aenderung des Zulaufverhältnisses a)/b) im Sinne einer Konstanthaltung des pH-Werts.

Es ist darüberhinaus oft von Vorteil, zusätzlich auch den Zulauf, der nicht als Stellgrösse dient, also vorzugsweise den Zulauf der diazotierten Diazokomponente a), unabhängig mit einer Durchfluss-Regelung zu versehen, um die Mischungsverhältnisse im Kupplungskessel und damit den pH-Wert noch weitgehender zu stabilisieren. Eine geeignete Durchflussregelung besteht z.B. aus einem Regler, der anhand des Vergleichs des Zulauf-Ist-Wertes mit dem Soll-Wert ein Ventil in der Zulaufleitung steuert; sie bewirkt eine weitgehend konstante Zugabe der entsprechenden Lösung a) bzw. b) zur Resorcin-Vorlage.

Die nach dem erfindungsgemässen Verfahren erhältlichen Mono- und Polyazofarbstoffe, die oftmals ein komplexes Gemisch verschiedener Komponenten darstellen, werden in an sich bekannter Weise, vorteilhaft in Form ihrer Salze, insbesondere Alkali-, vor allem Natrium- oder Kaliumsalze, oder Ammoniumsalze, isoliert.

Die zur Ausführung des erfindungsgemäsen Verfahrens verwendeten Geräte und Komponenten, z.B. Rührkessel, pH-Messeinrichtung, Durchflussmesser, Verhältnisgeber, Regler, Steuerventile etc., sind an sich bekannt z.B. aus den Standardwerken der Chemischen Technologie oder der Automatisierungstechnik.

Das erfindungsgemässe Verfahren ermöglicht es, den pH-Wert des Reaktionsgemisches bei Resorcin-Kupplungen sehr genau und mit geringen Toleranzen von z.B. maximal ± 0,5 pH-Einheiten und vorzugsweise maximal ± 0,2 pH-Einheiten zu steuern bzw. konstant zu halten; demzufolge können Mono- und Polyazofarbstoffe mit Resorcin als Kupplungskomponente im technischen Massstab mit überaus hoher Qualitätskonstanz und Ausbeute hergestellt werden. Unter Konstanthalten des pH-Wertes ist generell das Konstanthalten des aktuellen pH-Wertes im Reaktionsgefäss unabhängig von der jeweiligen Reaktionstemperatur, wie er mit einem pH-Messgerät erfasst wird, zu verstehen. Dieser "gemessene" pH-Wert weicht bei adiabatischer Arbeitsweise vom "tatsächlichen" pH-Wert, d.h. vom auf die Temperatur zu Beginn der Kupplung bezogenen pH-Wert ab, da ja der pH-Wert temperaturabhängig ist und insbesondere ein Ansteigen der Temperatur ein Absinken des pH-Wertes zur Folge hat.

Die nach dem erfindungsgemässen Verfahren erhältlichen Farbstoffe stellen gut wasserlösliche anionische Farbstoffe dar, die allgemein für das Färben von mit anionischen Farbstoffen anfärbbaren textilen und nicht-textilen Substraten, z.B. für das Färben von Fasermaterialien aus natürlicher oder regenerierter Cellulose wie z.B. Baumwolle, synthetischen Polyamiden wie z.B. Nylon, Wolle, Seide, Polyurethanen oder basisch modifizierten Polyolefinen, und vorzugsweise für das Färben von Leder, geeignet sind.

Die mit den nach dem erfindungsgemässen Verfahren hergestellen Farbstoffen erhältlichen Färbungen zeichnen sich durch gute applikatorische und färberische Eigenschaften, z.B. gute Licht-, Wasser-, Wasch-, Schweiss-, Trockenreinigungs-, Säure-, Alkali-, Lösungsmittel- und Diffusionsechtheit gegenüber Weich-PVC, gute Beständigkeit gegenüber Elektrolyten wie Natrium- oder Calciumsalzen sowie gegenüber Eisen-, Chrom-, Kobalt- oder Kupfersalzen und gutes Aufbauvermögen auf Reinchromleder und auf nachgegerbtem Leder, aus.

Die nachfolgenden Beispiele dienen der Erläuterung der Erfindung, ohne sie darauf zu beschränken. Teile bedeuten Gewichtsteile und Prozente Gewichtsprozente.

Beispiel 1: In einem Rührkessel, der mit pH-Messeinrichtung, Einlass für die Kupplungskomponente und die Pufferlösung sowie zwei getrennten Zulaufvorrichtungen für den Diazozulauf a) und den Basenzulauf b), die ihrerseits mit Durchflussmessern ausgestattet und über eine Durchflussverhältnisregelung miteinander gekoppelt sind, versehen ist, werden 750 Teile einer 20 Gew.-% Natriumcarbonat enthaltenden wässrigen Lösung und 19 Teile Resorcin eingetragen, mit Eis auf 0°C abgekühlt, mit Wasser auf ein Volumen von 2300 Volumenteile gestellt und unmittelbar vor der 1. Kupplung auf einen pH-Wert von 8,6 eingestellt.

Zu dieser Lösung werden unter adiabatischen Bedingungen 7000 Volumenteile einer wässrigen Suspension enthaltend 55,1 Teile in an sich bekannter Weise diazotierte 1-Amino-8-hydroxynaphthalin-3,6-disulfonsäure via Zulauf a) und 25%ige Natriumhydroxidlösung via Zulauf b) zulaufen gelassen und die Zuläufe a) und b) mittels der Durchflussverhältnisregelung so gesteuert, dass der pH-Wert konstant bei 8,6±0,2 bleibt. Die verwendete Durchflussverhältnisregelung besteht aus einem Verhältnisgeber, der aus dem Ist-Wert des Zulaufs a) und dem eingestellten Durchflussverhältnis a)/b) von ca. 9 bis 10 den Sollwert für den Zulauf b) bestimmt und an einen Regler übermittelt, der seinerseits den Zulauf b) über ein geeignetes Ventil steuert. Das am Verhältnisgeber eingestellte Durchflussverhältnis a)/b) ist jedoch nicht konstant, sondern wird durch einen pH-Regler gesteuert, der aus dem von der pH-Messeinrichtung ermittelten Reaktions-pH-Wert und dem vorgegebenen Soll-pH-Wert von 8,6 den Sollwert für das Zulaufverhältnis a)/b) ermittelt und eine entsprechende Einstellung bewirkt.

Nach Beendigung der 1. Kupplung wird die Temperatur des Reaktionsgemisches mit Eis auf ca. 5°C gestellt und in gleicher Weise wie zuvor bei der 1. Kupplung die Diazoverbindung aus 35,7 Teilen 4-Nitroanilin und 25%ige Natriumhydroxidlösung in das Reaktionsgemisch der 1. Stufe zulaufen gelassen. Der Soll-pH-Wert beträgt 8,5 bis 8,6 und das Zulaufverhältnis a)/b) ca. 14 bis 17.

Nach Beendigung der 2. Kupplung wird die Temperatur des Reaktionsgemisches mit Eis auf ca. 5°C gestellt und in gleicher Weise wie bei den vorangegangenen Kupplungen die Diazoverbindung aus 20,2 Teilen 2-Amino-4-nitrophenol-6-sulfonsäure und 25%ige Natriumhydroxidlösung mit einem Zulaufverhältnis a)/b) von ca. 6 bis 8 zum Reaktionsgemisch der 2. Stufe zulaufen gelassen, wobei der Soll-pH-Wert 8,5 bis 8,6 beträgt.

Nach Beendigung der 3. Kupplung wird der Farbstoff mit einem Gemisch aus Kaliumchlorid und Natriumchlorid ausgesalzen, abfiltriert und getrocknet. Der erhaltene Farbstoff weist eine sehr gute Typkonformität auf und färbt Leder in einer braunen Nuance mit guten Allgemeinechtheiten.

Beispiel 2: Verfährt man wie im Beispiel 1 beschrieben und verwendet zusätzlich für den Zulauf a) eine separate Durchfluss-Regelung, die aus einem Regler besteht, der anhand des Zulauf-Ist-Wertes mit dem Soll-Wert ein Ventil in der Zulaufleitung a) steuert, erhält man den identischen Farbstoff mit besonders guter Typkonformität.

Beispiel 3: In einem Rührkessel, der mit pH-Messeinrichtung, Einlass für die Kupplungskomponente und die Pufferlösung sowie zwei getrennten Zulaufvorrichtungen für den Diazozulauf a) und den Basenzulauf b), die ihrerseits mit Durchflussmessern ausgestattet und über eine Durchflussverhältnisregelung miteinander gekoppelt sind, versehen ist, werden 750 Teile einer 20 Gew.-% Natriumcarbonat enthaltenden wässrigen Lösung und 19 Teile Resorcin eingetragen, mit Eis auf 0 bis 5°C abgekühlt und unmittelbar vor der 1. Kupplung auf einen pH-Wert von 8,2 eingestellt.

Zu dieser Lösung werden unter adiabatischen Bedingungen 12000 Volumenteile einer wässrigen Suspension enthaltend 49,8 Teile in an sich bekannter Weise diazotiertes 4-(4'-Sulfophenylazo)-anilin via Zulauf a) und 25%ige Natriumhydroxidlösung via Zulauf b) zulaufen gelassen und die Zuläufe a) und b) mittels der Durchflussverhältnisregelung so gesteuert, dass der pH-Wert konstant bei 8,2±0,2 bleibt.

Die verwendete Durchflussverhältnisregelung besteht aus einem Verhältnisgeber, der aus dem Ist-Wert des Zulaufs a) und dem eingestellten Durchflussverhältnis a)/b) von ca. 10 bis 12 den Sollwert für den Zulauf b) bestimmt und an einen Regler übermittelt, der seinerseits den Zulauf b) über ein geeignetes Ventil steuert. Das am Verhältnisgeber eingestellte Durchflussverhältnis a)/b) ist jedoch nicht konstant, sondern wird durch einen pH-Regler gesteuert, der aus dem von der pH-Messeinrichtung ermittelten Reaktions-pH-Wert und dem vorgegebenen Soll-pH-Wert von 8,2 den Sollwert für das Zulaufverhältnis a)/b) ermittelt und eine entsprechende Einstellung bewirkt.

Nach beendetem Zulauf wird ca. eine halbe Stunde nachgerührt, dann der pH-Wert des Reaktionsgemisches durch Zugabe von 25%iger Natriumhydroxidlösung auf 9,5 angehoben und eine weitere halbe Stunde bei pH 9,5 ± 0,2 gerührt.

Nach Beendigung der 1. Kupplung wird die Temperatur des Reaktionsgemisches mit Eis auf ca. 5°C gestellt und in gleicher Weise wie bei der vorangegangenen Kupplung die Diazoverbindung aus 31,3 Teilen Anilin-4-sulfonsäure und 25%ige Natriumhydroxidlösung mit einem Zulaufverhältnis a)/b) von ca. 14 bis 17 zum Reaktionsgemisch der 1. Stufe zulaufen gelassen, wobei der Soll-pH-Wert 9,3 bis 9,5 beträgt.

Nach Beendigung der 2. Kupplung wird die Reaktionsmasse mit konz. HCl auf pH 3 gebracht und der Farbstoff mit Natriumchlorid ausgesalzen, abfiltriert und getrocknet. Der erhaltene Farbstoff weist eine sehr gute Typkonformität auf und färbt Leder in einer rotbraunen Nuance mit guten Allgemeinechtheiten.

Beispiel 4: In einem Rührkessel, der mit pH-Messeinrichtung, Einlass für die Kupplungskomponente und die Pufferlösung sowie zwei getrennten Zulaufvorrichtungen für den Diazozulauf a) und den Basenzulauf b), die ihrerseits mit Durchflussmessern ausgestattet und über eine Durchflussverhältnisregelung miteinander gekoppelt sind, versehen ist, werden 750 Teile Wasser, 35 Teile Natriumacetat und 19 Teile Resorcin eingetragen, mit Eis auf 0 bis 5°C abgekühlt und unmittelbar vor der 1. Kupplung auf einen pH-Wert von 4,5-4,7 eingestellt.

Zu dieser Lösung werden unter adiabatischen Bedingungen 2400 Volumenteile einer wässrigen Lösung enthaltend 25,9 Teile in an sich bekannter Weise diazotierte Anilin-3-sulfonsäure via Zulauf a) und 25%ige Natriumhydroxidlösung via Zulauf b) zulaufen gelassen und die Zuläufe a) und b) mittels der Durchflussverhältnisregelung so gesteuert, dass der pH-Wert konstant bei 5,0±0,2 bleibt.

Die verwendete Durchflussverhältnisregelung besteht aus einem Verhältnisgeber, der aus dem Ist-Wert des Zulaufs a) und dem eingestellten Durchflussverhältnis a)/b) von ca. 12 bis 15 den Sollwert für den Zulauf b) bestimmt und an einen Regler übermittelt, der seinerseits den Zulauf b) über ein geeignetes Ventil steuert. Das am Verhältnisgeber eingestellte Durchflussverhältnis a)/b) ist jedoch nicht konstant, sondern wird durch einen pH-Regler gesteuert, der aus dem von der pH-Messeinrichtung ermittelten Reaktions-pH-Wert und dem vorgegebenen Soll-pH-Wert von 5,0 den Sollwert für das Zulaufverhältnis a)/b) ermittelt und eine entsprechende Einstellung bewirkt.

Nach beendetem Zulauf wird noch 1 Stunde nachgerührt und anschliessend der Farbstoff mit Natriumchloid ausgesalzen, abfiltriert und getrocknet. Der erhaltene Farbstoff weist eine sehr gute Typkonformität auf und färbt Leder in einer orangen Nuance mit guten Allgemeinechtheiten.

## Patentansprüche

1. Verfahren zum Kuppeln von einer oder mehreren verschiedenen Diazokomponenten mit Resorcin, worin man eine wässrige Resorcinlösung im Reaktionsgefäss vorlegt, den gewünschten Kupplungs-pH-Wert einstellt und getrennt voneinander a) die mineralsaure Lösung der diazotierten Diazokomponente bzw. aufeinanderfolgend die mineralsauren Lösungen der verschiedenen diazotierten Diazokomponenten und b) die Lösung einer Base zulaufen lässt, dadurch gekennzeichnet, dass man die Kupplungsreaktion(en) adiabatisch durchführt und den Kupplungs-pH-Wert der Resorcin-Vorlage vor der Umsetzung mit Hilfe eines Puffersystems einstellt und stabilisiert und während der Kupplungsreaktion(en) mittels einer Durchflussverhältnis-Regelung der Zuläufe a) und b) konstant hält.

2. Verfahren gemäss Anspruch 1, dadurch gekennzeichnet, dass man als Diazokomponenten 1- oder 2-Naphthylamine und/oder Aminobenzole, welche jeweils unsubstituiert oder durch Sulfo, Nitro, C₁-C₄-Alkyl, C₁-C₄-Alkoxy, Carboxy, Hydroxy, Halogen und/oder gegebenenfalls im Phenylteil durch Nitro, Sulfo, C₁-C₄-Alkyl, C₁-C₄-Alkoxy und/oder Halogen substituiertes Phenylamino weitersubstituiert sind, verwendet.

3. Verfahren gemäss Anspruch 1, dadurch gekennzeichnet, dass man 2, 3 oder 4 gleiche oder verschiedene Diazokomponenten nacheinander mit Resorcin kuppelt.

4. Verfahren gemäss einem der Ansprüche 1 bis 3, dadurch gekennzeichnet, dass man 2, 3 oder 4 verschiedene Diazokomponenten, ausgewählt aus der Gruppe 1-Amino-8-hydroxynaphthalin-3,6-disulfonsäure, o-, m- oder p-Nitroanilin, 4'-Amino-4-nitrodiphenylamin-2-sulfonsäure, 6-Nitro-4-sulfo-2-aminophenol, 4-Nitro-6-sulfo-2-aminophenol und 4- oder 5-Nitro-2-aminophenol, nacheinander mit Resorcin kuppelt.

5. Verfahren gemäss einem der Ansprüche 1 bis 4, dadurch gekennzeichnet, dass man die Kupplungsreaktionen jeweils bei einem pH-Wert von 7,5 bis 12 und vorzugsweise 8,0 bis 9,0 durchführt.

6. Verfahren gemäss einem der Ansprüche 1 bis 5, dadurch gekennzeichnet, dass man ein Hydrogenphosphat/Dihydrogenphosphat-, Borsäure/Borat-, Diethylbarbitursäure/Diethylbarbiturat- oder Carbonat/Hydrogencarbonat-Puffersystem verwendet.

7. Verfahren gemäss Anspruch 6, dadurch gekennzeichnet, dass man ein Carbonat/Hydrogencarbonat-Puffersystem verwendet.

8. Verfahren gemäss einem der Ansprüche 1 bis 7, dadurch gekennzeichnet, dass von jeder verwendeten Diazokomponente 0,5 bis 2,0 Mol und vorzugsweise 0,6 bis 1,5 Mol pro Mol Resorcin eingesetzt werden.

9. Verfahren gemäss einem der Ansprüche 1 bis 8, dadurch gekennzeichnet, dass man als Base ein Alkalimetallhydroxid, Alkalimetallcarbonat, Ammoniak oder ein organisches Amin verwendet.

10. Verfahren gemäss Anspruch 9, dadurch gekennzeichnet, dass man ein Alkalimetallhydroxid, vorzugsweise Natriumhydroxid, als Base verwendet.

11. Verfahren gemäss einem der Ansprüche 1 bis 10, dadurch gekennzeichnet, dass die Durchflussverhältnis-Regelung der Zuläufe a) und b) selbsttätig mittels Computer erfolgt.

12. Verfahren gemäss Anspruch 11, dadurch gekennzeichnet, dass man die Durchflussverhältnis-Regelung derart ausführt, dass man den Durchfluss in der Zulaufleitung des Stroms a) misst und anhand seines Ist-Werts jeweils den Soll-Wert für den Zulauf b) ermittelt und einstellt.

13. Verfahren gemäss Anspruch 12, dadurch gekennzeichnet, dass man den Zulauf a) unabhängig mit einer separaten Durchfluss-Regelung versieht.

## Claims

1. A process for coupling one or more different diazo components with resorcinol by charging a reaction vessel with an aqueous solution of resorcinol, adjusting the pH for the coupling to the desired value and running in separately from each other a) the mineral acid-containing solution of the diazotised diazo component or, in succession, the mineral acid-containing solutions of the different diazotised diazo components, and b) the solution of a base, which process comprises carrying out the coupling reaction(s) under adiabatic conditions and adjusting and stabilising the coupling pH of the resorcinol charge prior to the reaction with the aid of a buffer system, and keeping the coupling pH constant during the coupling reaction(s) by controlling the flow ratio of the streams a) and b).

2. A process according to claim 1, wherein the diazo components used are 1- or 2-naphthylamines and/or aminobenzenes, which are each unsubstituted or further substituted by sulfo, nitro, C₁-C₄alkyl, C₁-C₄alkoxy, carboxyl, hydroxyl, halogen and/or by phenylamino which may be substituted in the phenyl moiety by nitro, sulfo, C₁-C₄alkyl, C₁-C₄alkoxy and/or halogen.

3. A process according to claim 1, which comprises coupling in succession 2, 3 or 4 identical or different diazo components with resorcinol.

4. A process according to any one of claims 1 to 3, which comprises coupling in succession 2, 3 or 4 different diazo components selected from the group consisting of 1-amino-8-hydroxynaphthalene-3,6-disulfonic acid, o-, m- or p-nitroaniline, 4'-amino-4-nitrodiphenylamine-2-sulfonic acid, 6-nitro-4-sulfo-2-aminophenol, 4-nitro-6-sulfo-2-aminophenol and 4- or 5-nitro-2-aminophenol with resorcinol.

5. A process according to any one of claims 1 to 4, which comprises carrying out the coupling reactions in each case at a pH of 7.5 to 12 and, preferably, of 8.0 to 9.0.

6. A process according to any one of claims 1 to 5, which comprises using a hydrogenphosphate/dihydrogenphosphate, boric acid/borate, diethylbarbituric acid/diethyl barbiturate or carbonate/hydrogencarbonate buffer system.

7. A process according to claim 6, which comprises using a carbonate/hydrogencarbonate buffer system.

8. A process according to any one of claims 1 to 7, wherein 0.5 to 2.0 mol, preferably 0.6 to 1.5 mol, of each diazo component used is employed per mole of resorcinol.

9. A process according to any one of claims 1 to 8, wherein the base used is an alkali metal hydroxide, alkali metal carbonate, ammonia or an organic amine.

10. A process according to claim 9, wherein the base used is an alkali metal hydroxide, preferably sodium hydroxide.

11. A process according to any one of claims 1 to 10, wherein the flow ratio control of the streams a) and b) is made automatically by computer.

12. A process according to claim 11, which comprises carrying out the flow ratio control such that the flow in the feed line of the stream a) is measured and, from its actual value, the nominal value for the stream b) is determined and set.

13. A process according to claim 12, wherein the stream a) is provided independently with a separate flow control.

## Revendications

1. Procédé pour la copulation d'un ou de plusieurs composants diazo différents sur du résorcinol, dans lequel on introduit une solution aqueuse de résorcinol, comme charge initiale, dans la cuve de réaction, on ajuste le pH de copulation souhaité et on ajoute séparémment
a) la solution du composant diazo diazoté contenant un acide minéral, ou, successivement, les solutions acides des différents composants diazo diazotés et
b) une solution basique,
lequel procédé est caractérisé en ce que la ou les réaction(s) de copulation est ou sont réalisée(s) dans des conditions adiabatiques et en ce que la valeur du pH de copulation de la charge initiale de résorcinol est ajustée et stabilisée avant le début de la réaction à l'aide d'un système tampon et en ce que l'on maintient, pendant la ou les copulation(s), cette valeur constante au moyen d'une régulation du rapport des débits des entrées a) et b).

2. Procédé conforme à la revendication 1, caractérisé en ce que l'on utilise comme composants diazo, les 1- ou 2-naphtylamines et/ou aminobenzènes pouvant être non substitués ou substitués par un groupe nitro, sulfo, alkyle en C₁₋₄, alcoxy en C₁₋₄, carboxy, hydroxy, halogéno et/ou par un groupe phénylamino pouvant être substitué, dans sa partie phényle, par un groupe nitro, sulfo, alkyle en C₁₋₄, alcoxy en C₁₋₄ et/ou halogéno.

3. Procédé conforme à la revendication 1, caractérisé en ce que l'on copule successivement 2, 3 ou 4 composants diazo identiques ou différents sur le résorcinol.

4. Procédé conforme à la revendication 1 à 3, caractérisé en ce que l'on copule 2, 3 ou 4 composants diazo différents choisis dans le groupe formé par l'acide 1-amino-8-hydroxynaphtalène-3,6-disulfonique, l'ortho-, méta- ou para-nitroaniline, l'acide 4'-amino-4-nitrodiphénylamin-2-sulfonique, le 6-nitro-4-sulfo-2-aminophénol, le 4-nitro-6-sulfo-2-aminophénol et le 4- ou 5-nitro-2-aminophénol.

5. Procédé conforme à une des revendications 1 à 4, caractérisé en ce que l'on effectue la copulation à un pH compris entre 7,5 et 12 et de préférence entre 8,0 et 9,0.

6. Procédé conforme à une des revendications 1 à 5 caractérisé en ce que l'on utilise, comme système tampon, un couple hydrogénophosphate/dihydrogénophosphate, acide borique/borate, acide diéthylbarbiturique/diéthylbarbiturate ou carbonate/hydrogénocarbonate.

7. Procédé conforme à la revendication 6, caractérisé en ce que l'on utilise, comme système tampon, le système carbonate/hydrogénocarbonate.

8. Procédé conforme à une des revendications 1 à 7, caractérisé en ce que l'on utilise de 0,5 à 2,0, de préférence de 0,6 à 1,5 mole de chaque composant diazo par mole de résorcinol.

9. Procédé conforme à une des revendications 1 à 8, caractérisé en ce que l'on utilise, comme base, un hydroxyde de métal alcalin, un carbonate de métal alcalin, de l'ammoniaque ou une amine organique.

10. Procédé conforme à la revendication 9, caractérisé en ce que l'on utilise, comme base, un hydroxyde de métal alcalin, de préférence l'hydroxyde de sodium.

11. Procédé conforme à une des revendication 1 à 10, caractérisé en ce que la régulation du rapport des débits a) et b) se fait automatiquement à l'aide d'un ordinateur.

12. Procédé conforme à la revendication 11, caractérisé en ce que l'on réalise la régulation du rapport des débits en mesurant le débit dans le conduit d'arrivée du flux a) et en déterminant et ajustant, à l'aide de cette valeur instantanée mesurée, la valeur de consigne pour le débit du flux b).

13. Procédé conforme à la revendication 12, caractérisé en ce que l'on munit le conduit d'arrivée a) indépendamment d'un dispositif de régulation du débit séparé.
